# FASCICULE DE BREVET EUROPEEN

(11) **EP 1 076 790 B1**
(45) Date de publication et mention de la délivrance du brevet: **26.11.2003**
(21) Numéro de dépôt: 99916991.5
(22) Date de dépôt: 05.05.1999
(51) Int. Cl.: F16L 1/23, F16L 1/20, E21B 19/06

(54) **BRIDE DE SERRAGE NOTAMMENT POUR CONDUITE PETROLIERE**
KLEMMVORRICHTUNG FÜR ERDÖLLEITUNG
CLAMPING RING IN PARTICULAR FOR OIL DUCT

(30) Priorité: 13.05.1998 FR 9806031
(43) Date de publication de la demande: 21.02.2001
(73) Titulaire: COFLEXIP, 92973 Paris La Defense (FR)
(72) Inventeur: GUERIN, Jean, F-76130 Mont-Saint-Aignan (FR)
(74) Mandataire: Bertrand, Didier
(86) Numéro de dépôt international: FR9901062
(87) Numéro de publication internationale: WO99058889

(56) Documents cités:
- GB-A- 2 299 646
- US-A- 3 540 642
- US-A- 4 715 456
- US-A- 4 865 359

## Description

La présente invention concerne une bride de serrage (en anglais "clamp") de grande taille, notamment destinée à maintenir par serrage une conduite pétrolière, rigide ou flexible, ou un élément allongé cylindrique lourd analogue (tube, câble, ombilical), et adaptée en particulier à être utilisée dans un dispositif d'installation de conduites tubulaires sous l'eau à partir d'un navire de pose.

La demande de brevet français n° 98 00 148 au nom de la Demanderesse, à laquelle on se reportera utilement et dont on incorpore ici l'enseignement par référence, fait connaître un dispositif de pose de conduites de la famille des dispositifs de pose en J. Il comprend une tour inclinable, disposée dans et sur une grande hauteur au-dessus du niveau du puits central du navire de pose, agencée pour y recevoir une certaine longueur de conduite à poser, et des moyens de retenue et de déplacement de ladite longueur de conduite ; lesdits moyens comprennent deux chariots mobiles motorisés capables de parcourir ladite hauteur de la tour, et susceptibles de recevoir des organes de retenue de conduite. Ces organes de retenue sont très avantageusement des brides à mâchoires de serrage (en anglais "clamps"), c'est-à-dire des dispositifs de serrage vrai (et statique) se distinguant notamment des tensionneurs linéaires à chenilles (impliquant un déplacement de la conduite simultané aux mâchoires de serrage). Par la commande du serrage des "clamps" et le déplacement de l'un ou de l'autre des chariots le long de la tour, il est possible d'utiliser le dispositif décrit dans la demande précitée dans un grand nombre de configurations possibles, donnant au dispositif une grande versatilité, pour effectuer le déplacement de la conduite du type pas-à-pas ("hand over hand", en anglais).

On connaît par le document GB 2 299 646 une bride de serrage à mâchoires portées par des bielles en parallélogramme articulé, conformément au préambule de la revendication 1 annexée. Cependant dans ce dispositif destiné à maintenir une conduite horizontale, le mouvement des mâchoires est essentiellement longitudinal et peu adapté au problème que vise l'invention, à savoir retenir de lourdes conduites verticales.

Le but de l'invention est de proposer une bride de serrage particulièrement bien adaptée à ce contexte.

Le but de l'invention est atteint grâce à une bride annulaire de serrage, comprenant une base annulaire rigide présentant un axe et supportant par des moyens de support un ensemble annulaire coaxial de mâchoires parallèles à l'axe et mobiles dans des plans diamétraux, lesdits moyens de support comportant d'une part un corps annulaire rigide entourant l'ensemble de mâchoires, mobile en translation axiale grâce à des vérins commandables qui le relient à la base, les mâchoires étant reliées au corps annulaire par au moins deux bielles formant parallélogramme articulé, caractérisée en ce que lesdits moyens de support comportent d'autre part des bielles longues articulées sur la base et sur l'extérieur des mâchoires dans une position voisine de la direction axiale, de sorte que la translation axiale du corps annulaire par rapport à la base entraîne un déplacement essentiellement radial et synchronisé de l'ensemble de mâchoires.

Avantageusement, chacune des mâchoires est constituée d'un mors principal constitué d'une poutre principale et d'un mors secondaire constitué d'une poutrelle adaptatrice montée sur la poutre principale à une distance réglable entre au moins deux positions, ce qui permet d'augmenter la diversité des diamètres des conduites qui peuvent être reçues. De préférence, le réglage de la distance peut être différent d'une poutrelle à l'autre ou d'un groupe de poutrelles à l'autre, de façon à pouvoir utiliser dans le cas des faibles diamètres de conduite un nombre réduit de poutrelles.

Cette diversité est encore accrue si les poutrelles adaptatrices sont choisies dans des jeux de plusieurs tailles.

Avantageusement, il est prévu dans la base et le corps de bride de pouvoir ouvrir un secteur constituant ainsi une porte, avantageusement verrouillable, pour le passage latéral d'une conduite ou l'inspection.

L'invention sera mieux comprise grâce à la description suivante d'un mode particulier de réalisation, se référant aux dessins annexés sur lesquels :
- la figure 1 est une vue de dessus de la bride de l'invention,
- la figure 2 est une vue de dessus de la même bride, porte latérale ouverte,
- la figure 3 est une vue en coupe A-A de la bride de la figure 1,
- la figure 4 est une vue en coupe A-C de la bride de la figure 1, la demi-coupe gauche représentant la bride en position fermée (position de serrage), tandis que la demi-coupe droite la représente en position ouverte (position de dégagement),
- les figures 5A, 5B et 5C sont des vues respectivement de côté, de face et de dessus d'une poutre verticale principale de mâchoire,
- les figures 6A, 6B et 6C sont des vues respectivement de côté, de face et de dessus d'une poutrelle adaptatrice de mâchoire,
- les figures 7A et 7C sont des vues respectivement de côté et de dessus d'une poutre et d'une poutrelle des figures 5 et 6, associées en position déployée,

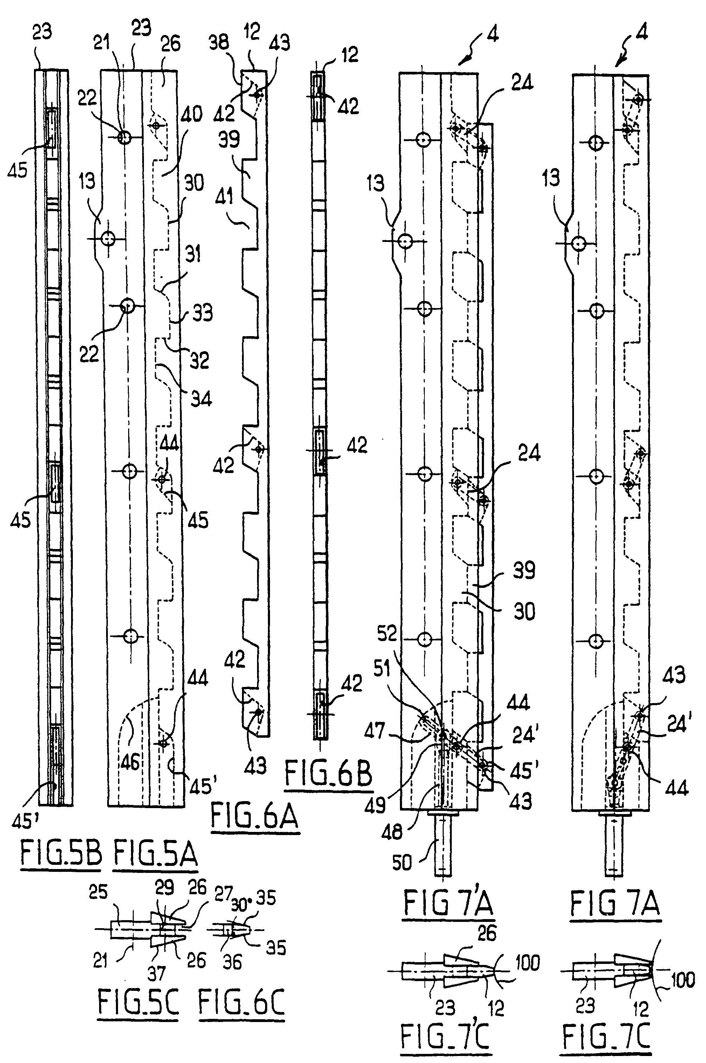

- les figures 7'A et 7'C sont des vues respectivement de côté et de dessus d'une poutre et d'une poutrelle des figures 5 et 6, associées en position rapprochée,

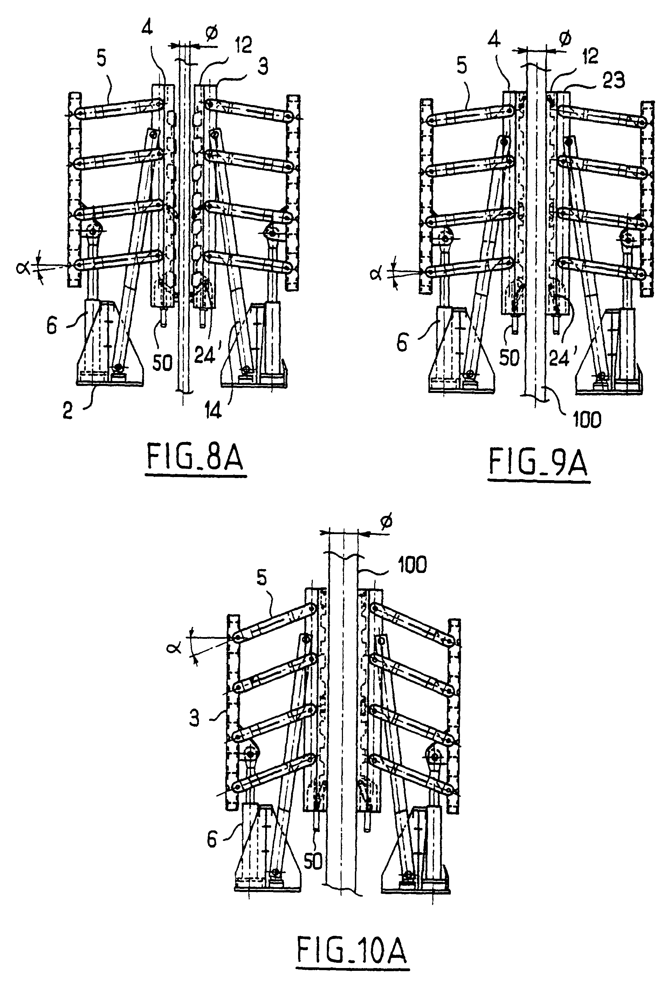

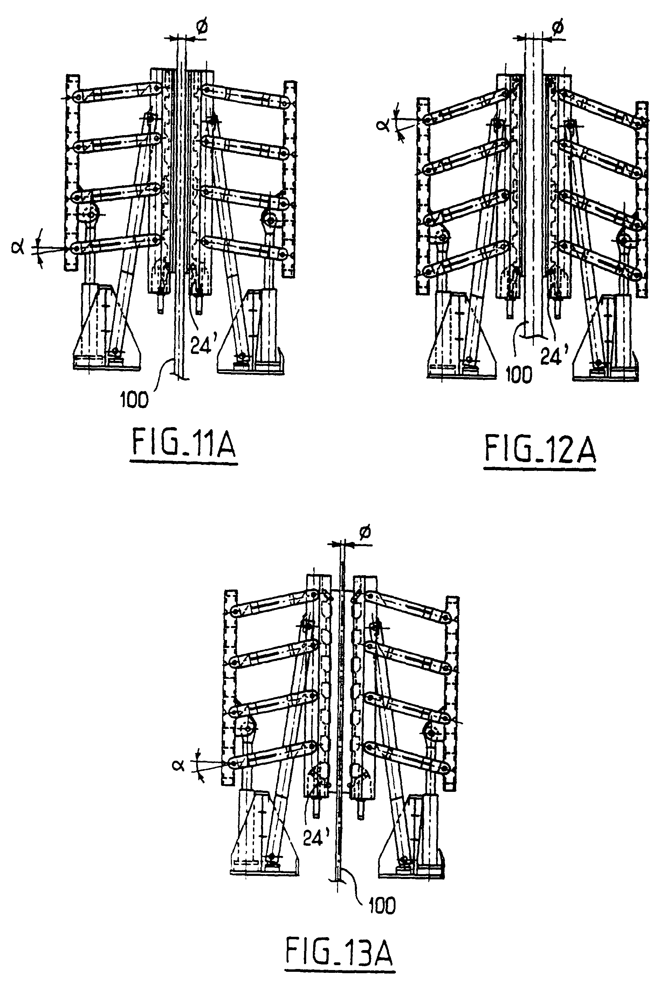

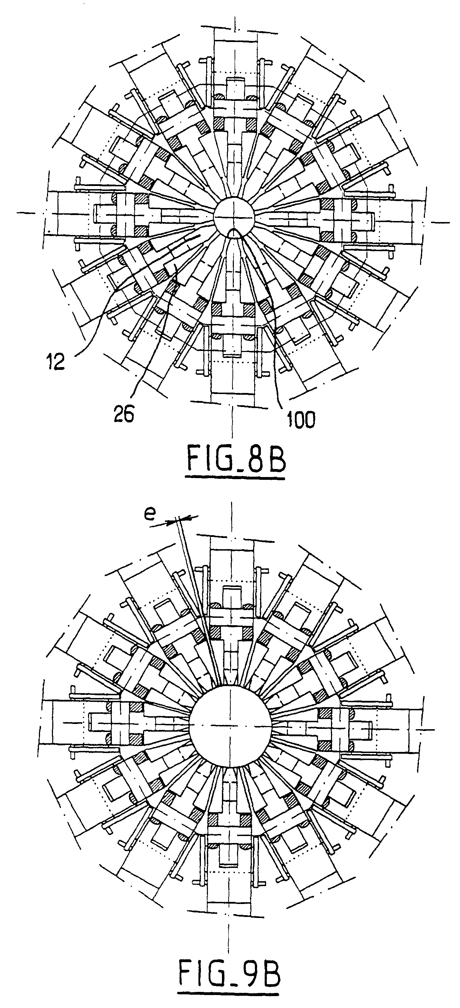

- les figures 8A et 8B sont des vues schématiques respectivement de côté et de dessus d'une bride de serrage de l'invention, avec des mâchoires à poutrelle adaptatrice d'un premier type, serrant une conduite d'un premier diamètre,

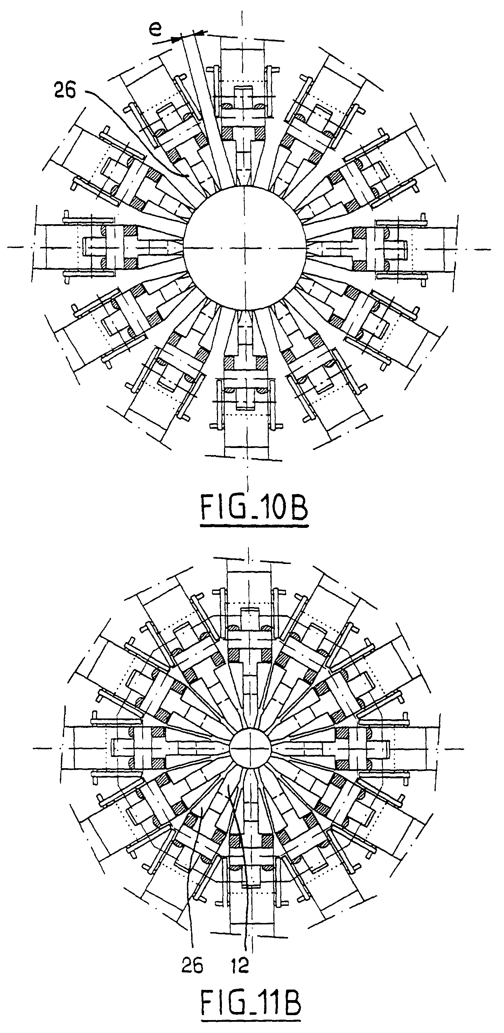

- les figures 9A, 9B, 10A et 10B sont des vues analogues aux figures 8A et 8B pour respectivement des conduites d'un deuxième, troisième diamètre et les mêmes mâchoires,

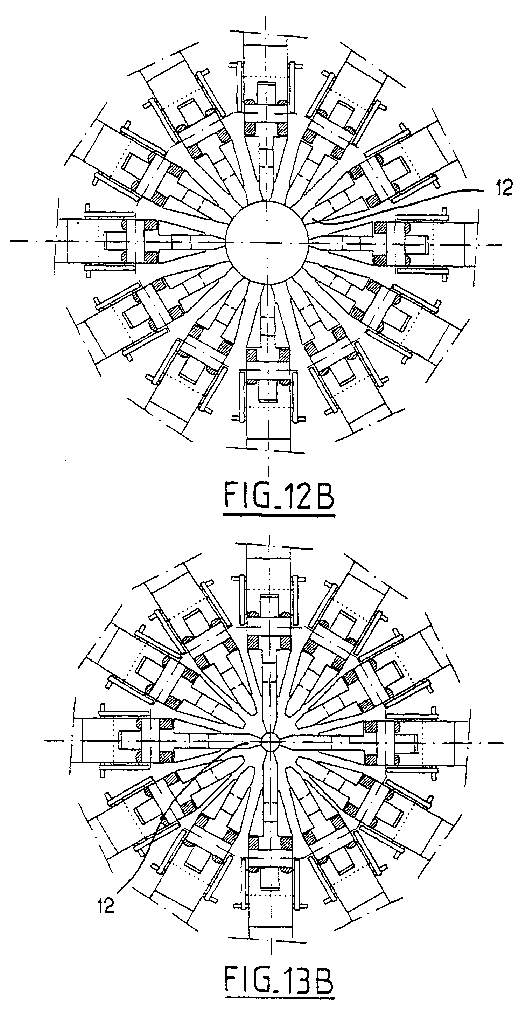

- les figures 11A, 11B, 12A et 12B d'une part et 13A et 13B sont des vues analogues aux figures précédentes pour respectivement des conduites d'un quatrième, et cinquième diamètre avec un deuxième type de mâchoires, et d'un sixième diamètre avec le même deuxième type de mâchoires dont seulement une sur trois est en position déployée,

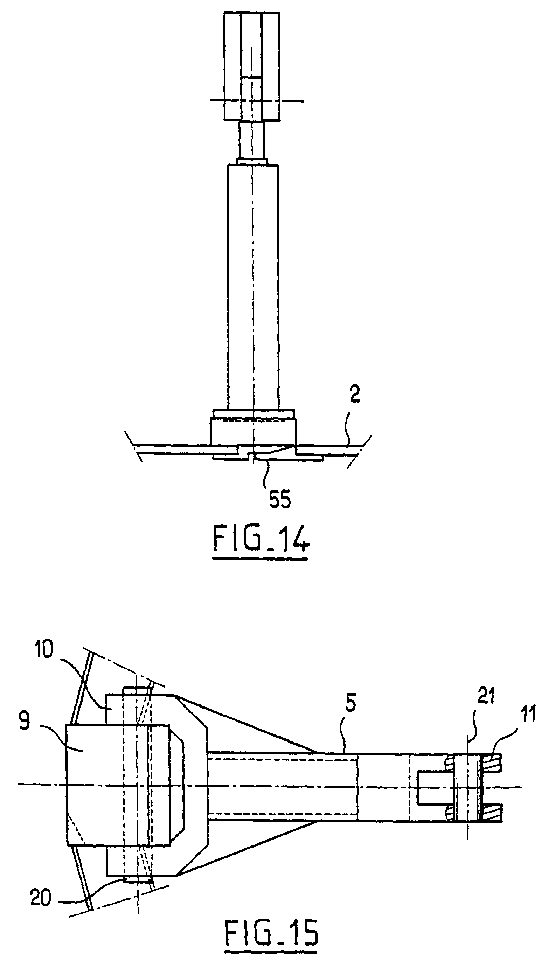

- la figure 14 est une vue de côté du détail de construction de la base de bride, au niveau de son ouverture,
- la figure 15 est une vue de dessus de détail de la chape d'articulation d'une bielle de commande des mâchoires,

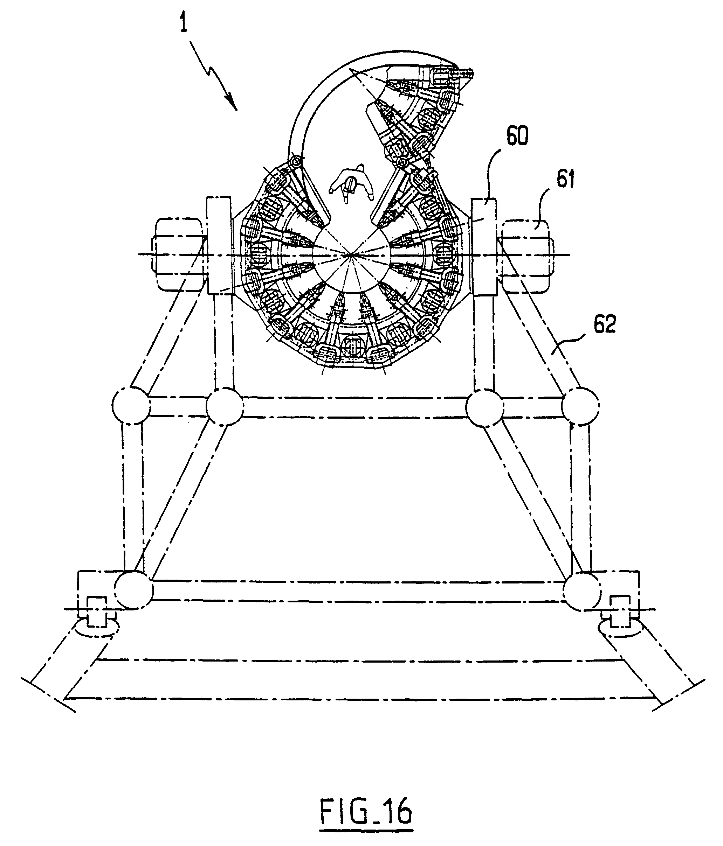

- la figure 16 est une vue de dessus schématique d'une bride de serrage conforme à l'invention montée dans une tour de pose de conduite représentée en pointillés.

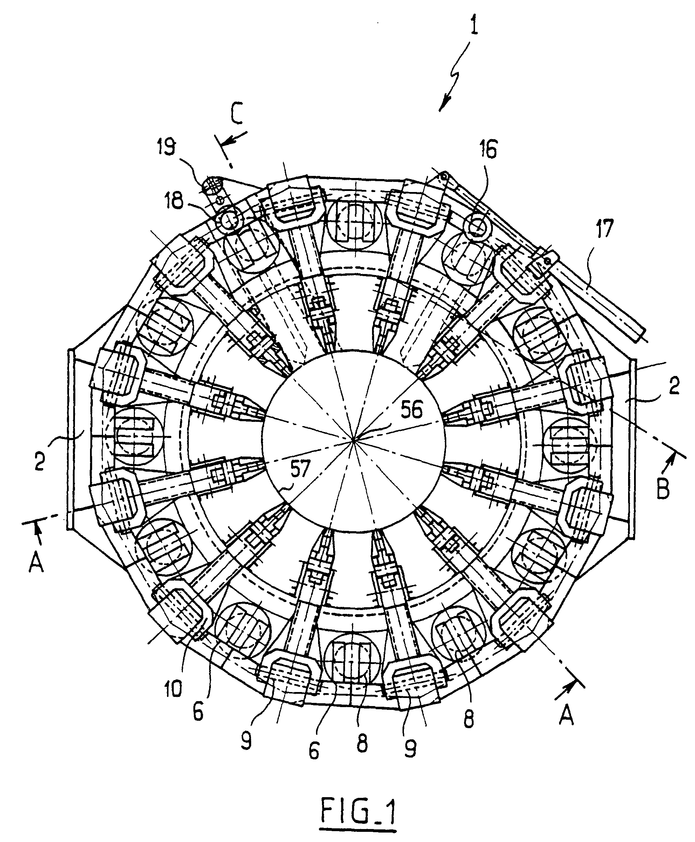

On se reporte d'abord aux figures 1 à 4. La bride de serrage 1 de l'invention se compose essentiellement d'une base annulaire rigide 2, d'environ 5 m de diamètre, supportant un corps de bride 3 d'environ 4 m de hauteur, mobile verticalement, sur lequel sont montées douze mâchoires 4 également d'environ 4 m de hauteur, par l'intermédiaire de quatre bielles articulées parallèles 5 d'environ 1,6 m de longueur, assurant la verticalité des mâchoires 4.

La base 2 est constituée par une structure de poutre annulaire, laissant au céntre un orifice 57 de passage de conduite d'environ 1,6 m de diamètre). Sur la structure annulaire sont fixés, répartis sur la circonférence, les corps de douze vérins hydrauliques verticaux 6 dont les têtes de tige 7 sont articulées dans des chapes 8 solidaires du corps de bride 3.

Le corps de bride 3 est constitué par une structure rigide cylindrique (ou polygonale pour la commodité de la réalisation en douze secteurs assemblés) qui comporte sur sa surface intérieure, outre les chapes 8 déjà mentionnées, les supports d'articulation 9 destinés aux pieds en forme de chape 10 des bielles 5 reliées aux mâchoires 4. La figure 15 montre plus en détail l'articulation de la chape 10 de pied de bielle 5, sur un axe 20 traversant le support 9.

Les bielles 5 sont réalisées sous forme de tubes rigides dont les têtes 11 sont également conformées en chapes, afin d'être articulées autour d'axes 21 traversant quatre trous 22 alignés verticalement dans les mâchoires 4, comme l'illustrent les figures 5 à 7 auxquelles on se reportera maintenant. Les mâchoires 4 sont constituées de poutres verticales 23 doublées intérieurement par une poutrelle adaptatrice 12 mobile, articulée sur la poutre 23 par des biellettes 24 et 24'.

Chaque poutre 23 comporte un profilé 25 à section sensiblement rectangulaire prolongé, sur sa face radialement intérieure (par rapport à sa position dans la bride circulaire), par deux ailes profilées triangulaires 26 définissant entre elles un espace vertical 27 à section sensiblement en U dont le fond est formé par la face radialement intérieure 29 du profil 25. Cette face 29 est crénelée par des merlons successifs 30 comportant un flanc oblique 31 et un flanc droit 32 encadrant un sommet plat 33, deux merlons 30 étant séparés par un créneau 40 à fond 34 plat.

Chaque poutrelle adaptatrice 12 est constituée par un profilé de section sensiblement rectangulaire dont l'épaisseur correspond sensiblement à la largeur de l'espace 27 dans lequel elle est destinée à s'insérer, et dont la longueur peut être choisie en fonction des diamètres des conduites à serrer dans une certaine gamme. Du côté radialement intérieur de la poutrelle 12, les bords forment des chanfreins 35, inclinés à 15° par rapport au plan médian vertical 36 du profilé, et parallèles aux faces obliques 37 des ailes 26. La face radialement extérieure de la poutrelle 12 est constituée de merlons 39 complémentaires des créneaux 40 du profilé 25. De même, les créneaux 41 séparant les merlons 39 sont complémentaires des merlons 30.

Il est prévu dans l'épaisseur de trois merlons 39 de la poutrelle 12, avantageusement en haut, vers le milieu et en bas de la poutrelle, un évidement 42 dont les parois verticales sont percées d'un orifice 43 de passage d'axe permettant d'articuler une extrémité des biellettes 24 et 24'. L'autre extrémité des biellettes 24 et une région intermédiaire de la biellette 24' s'articule de la même façon sur un axe 44 fixé dans les parois d'évidements 45 formés dans des merlons 30 correspondants de la poutre 23. La largeur et la forme des évidements 42 et 45 permet le passage et le pivotement nécessaire des biellettes 24 et 24'. L'évidement inférieur 45' est différent des deux évidements 45 du haut et du milieu en ce qu'il se prolonge vers le bas du profilé et aussi radialement vers l'extérieur, par une cavité de manoeuvre 46 à l'intérieur même du profilé 25.

La cavité 46 est destinée à accueillir d'une part un prolongement 47 de la biellette inférieure 24', et d'autre part la tige 48 et la tête 49 d'un vérin 50 dont le corps est disposé sous la poutre 4. La biellette inférieure 24' comporte d'une part une partie identique en dimensions aux biellettes 24 et articulée de la même façon sur les axes 43 et 44, et d'autre part, au-delà de l'articulation en 44, le prolongement rigide 47 comportant une lumière longitudinale 51 dans laquelle glisse l'axe d'articulation 52 de la tête 49 du vérin 50.

Dans la position rétractée représentée sur les figures 7A et 7C, la tige 48 du vérin 50 est rentrée et a contraint la biellette 24' à basculer complètement de manière à présenter l'axe 43 dans la position la plus haute possible ; l'ensemble des biellettes 24 et 24' a basculé en même temps et à disposé la poutrelle 12. toujours verticale, dans sa position la plus haute, où elle s'engage, du fait de la parfaite complémentarité des merlons et des créneaux prévus d'une part sur la poutre 23, d'autre part sur la poutrelle 12, complètement dans l'espace 27, et est donc en position rentrée entre les ailes 26 de la poutre 23. L'emboîtement des merlons et des créneaux de la poutre et de la poutrelle assure la reprise totale des forces verticales exercées d'un élément sur l'autre. Le flanc oblique 31 et le flanc oblique correspondant sur l'élément complémentaire permettent la manoeuvre de pivotement des bielles et le dégagement des parties emboîtées. De plus, les composantes horizontales de forces résultant du poids d'une conduite (esquissée en 100) appliqué à la poutrelle et tendant à l'écartement des deux éléments du fait de l'obliquité des flancs en contact, sont contrecarrées d'une part par le frottement des deux flancs l'un sur l'autre et la force de maintien en position du vérin 50, et d'autre part par l'impossibilité physique d'écarter les deux éléments l'un de l'autre, la poutre 23 étant bloquée radialement vers l'extérieur par le reste de la structure de la bride de serrage, et la poutrelle 12 étant bloquée radialement vers l'intérieur par la conduite 100 sur laquelle précisément elle s'appuie. L'effet résultant est finalement une amélioration de la force de serrage.

Dans la position déployée représentée sur les figures 7'A et 7'C, la tige 48 du vérin 50 est sortie, et a entraîné le basculement de la biellette 24', de manière que l'axe 43 atteigne au terme de sa trajectoire circulaire son point le plus bas. Dans cette position, la poutrelle 12 repose par ses merlons 39 sur les merlons 30 de la poutre 23, et dépasse hors des ailes 26 comme le montre la figure 7'C. Le poids d'une conduite (esquissée en 100) en contact avec les poutrelles 12 tend à appuyer encore plus fermement la poutrelle sur la poutre, du fait que les axes 43 des biellettes 24 et 24' sont situés en dessous des axes 44. Le déploiement ou la rentrée des poutrelles adaptatrices permet d'établir une différence de 9 cm par rapport à l'axe de la bride (soit une différence de diamètre de 18cm pour une conduite retenue dans la bride).

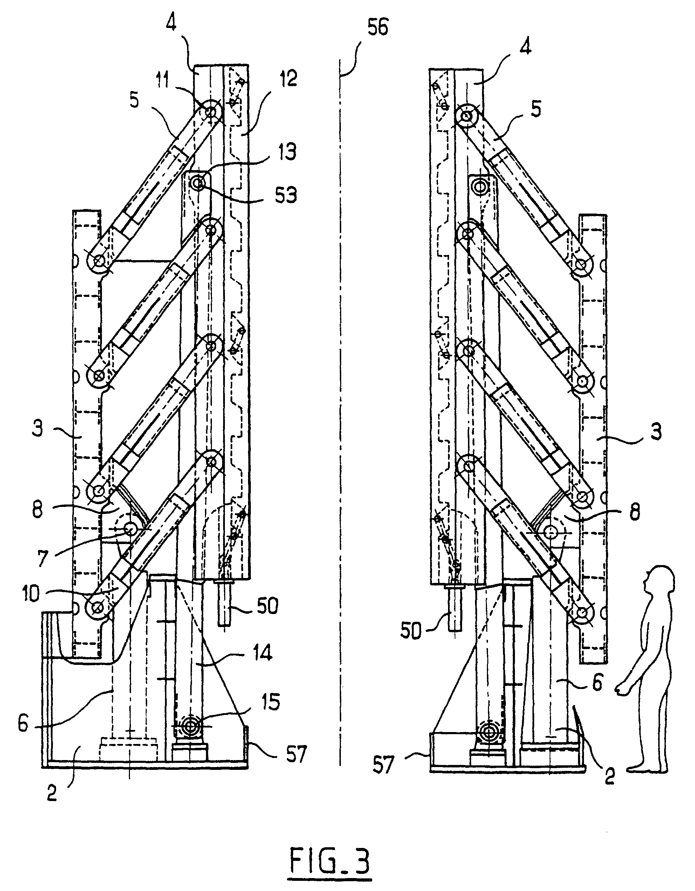

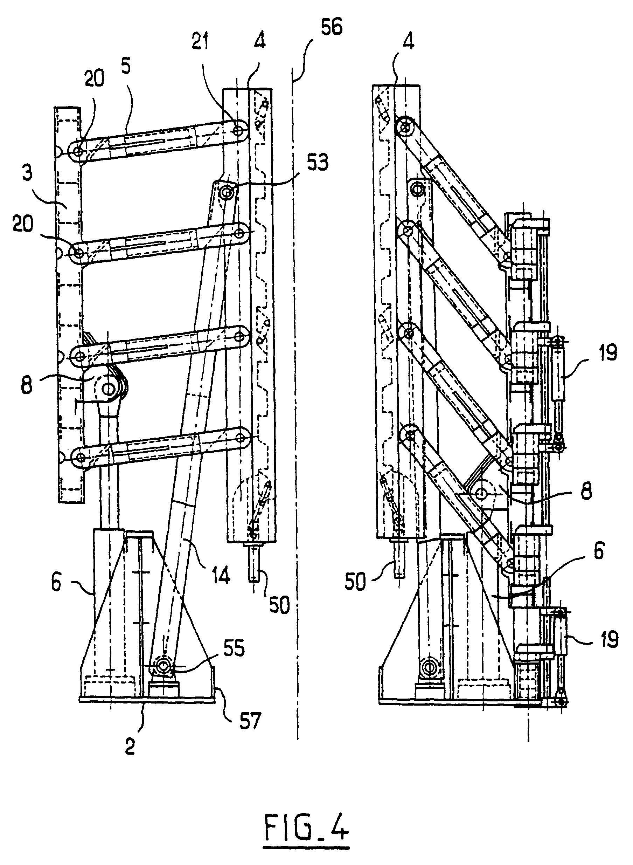

La poutre 23 comporte les quatre trous 22 d'axe alignés déjà mentionnés, et, radialement vers l'extérieur et vers le haut de la poutre 23, une oreille 13 loge l'axe d'articulation 53 de la tête de douze bielles longues 14 (environ 4,8 m), proches de la verticale, dont le pied est articulé en 15 à la base 2 (cf. figures 3 et 4).

On voit, en comparant les moitiés droite et gauche de la figure 4, que la sortie de la tige du vérin 6 soulève la chape 8 et tout le corps 3 (moitié gauche); les mâchoires 4, maintenues à l'arrière par l'articulation 53, ne sont pas libres de se soulever en même temps que le corps 3 ; il se produit donc une rotation relative des bielles 5 autour de leurs articulations sur les axes 20, les bielles 5 prenant une position plus proche de l'horizontale (par exemple, entre 7 et 22° sur l'horizontale dans les positions de serrage). Comme le corps 3 est à distance fixe de l'axe central 56 de la bride, il en résulte un rapprochement des mâchoires 4 et de l'axe central 56, correspondant à un serrage de la conduite qui a pu être placée dans la bride 1. Pendant ce rapprochement, la mâchoire 4 reste verticale du fait du système à parallélogramme articulé constitué par les bielles 5, et sa position en hauteur n'a que très légèrement varié, en conséquence de la légère rotation de la bielle longue 14 de liaison presque verticale à la base 2. En considérant la base 2 comme référence, et en supposant qu'une conduite sur laquelle sont serrées les mâchoires 4 transmet à celles-ci son poids, on voit que les forces résultantes sur les mâchoires 4 qui tendent à pousser celles-ci vers le bas tendent du même coup à les rapprocher de l'axe 56 en vertu de l'articulation imposée les bielles de liaison 14 à la base fixe, et donc tendent à serrer davantage la conduite.

Sur la moitié droite de la figure 4, la rentrée totale du vérin 6 a placé le corps 3 dans sa position la plus basse et fait pivoter les bielles 5, relativement au corps 3, dans leur position la plus rapprochée de la verticale (52° sur l'horizontale), ce qui a pour conséquence de placer la mâchoire 4 dans sa position la plus éloignée de l'axe central 56, c'est-à-dire dans la position d'ouverture maximale de la bride de serrage. Dans cette position, l'écartement entre les mâchoires est identique au diamètre de l'ouverture 57 de la base 2.

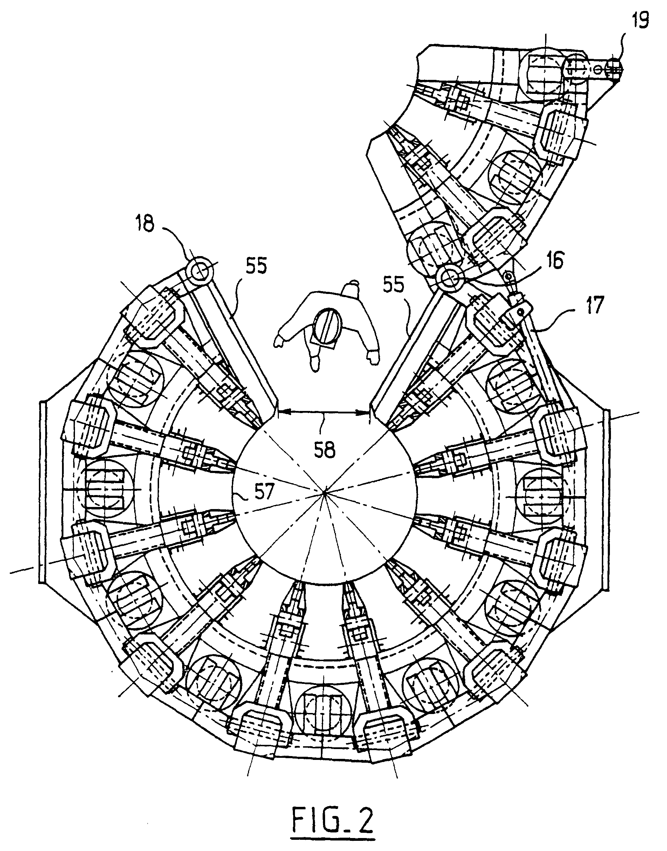

La base 2 et le corps 3 peuvent s'ouvrir sur un secteur angulaire suffisant pour laisser le passage d'une conduite dans la bride, par exemple, un passage 58 d'environ 0,8 m comme représenté sur la figure 2. L'ouverture est réalisée par le pivotement d'un secteur autour d'une articulation 16 à l'aide d'un vérin de manoeuvre 17. La fermeture et le verrouillage sont réalisés au niveau d'une pièce annulaire 18 coopérant avec des vérins de blocage 19 (cf. figures 2 et 4). La base 2 comporte, au niveau des bords du secteur angulaire pivotant, des joints 55 à recouvrement.

La bride de serrage 1 conforme à l'invention peut être installée comme le montre la figure 16 dans un chariot 60 à roues motorisées 61, lui-même monté dans une tour 62 de pose de conduite (cf. la demande de brevet précitée 98 00 148). La bride peut aussi être montée sur tout autre système de déplacement pas-à-pas connu en soi.

Naturellement, il est prévu une unité non représentée de commande hydraulique pour alimenter les divers vérins hydrauliques de la bride de serrage.

Le fonctionnement de la bride de serrage 1 pour serrer des conduites de différents diamètres va maintenant être expliqué en se référant plus particulièrement aux figures 8 à 13. Pour permettre à la bride de l'invention son adaptation aux différents diamètres de conduite, on conjugue en première part des dimensions différentes de poutrelles adaptatrices 12 des mâchoires, en seconde part le déploiement ou la rentrée desdites poutrelles adaptatrices dans les poutres principales de mâchoires (le cas échéant de manière indépendante d'une poutrelle à l'autre), et en troisième part, naturellement, le réglage de l'écartement des mâchoires grâce à la montée ou la descente commandée du corps de bride 3 et au jeu des différentes bielles 5 et 14.

Les figures 8, 9 et 10 montrent l'utilisation d'une bride de serrage dans laquelle les poutrelles adaptatrices 12 des mâchoires 4 sont de la plus petite taille (celle également illustrée sur les figures 7), pour laquelle les poutrelles 12 sont complètement comprises entre les ailes 26 des poutres 23 lorsque les mâchoires sont en position rentrée. Dans les figures 8A et 8B, la bride serre une conduite 100 de 0,22 m de diamètre. Les vérins 6 sont sortis au maximum et les bielles 5 sont à leur angle d'inclinaison α minimum avec l'horizontale (7°). Les vérins 50 des mâchoires sont en position sortie, comme le montre l'inclinaison de la biellette 24', et la position déployée des poutrelles 12 par rapport aux poutres 23 des mâchoires. Comme le montre la figure 8B, les ailes chanfreinées 26 des poutres 23 d'une part, les bords chanfreinés des poutrelles 12 d'autre part, peuvent venir très près les uns des autres lorsqu'ils se serrent autour de conduite. L'écartement e entre deux ailes voisines est d'environ 13 mm.

Dans les figures 9A et 9B, la seule modification est qu'on a rentré les vérins 50 et donc les poutrelles 12 dans l'évidement des poutres 23, gagnant ainsi en diamètre deux fois 90 mm, c'est-à-dire permettant le serrage d'une conduite de 0,4 m de diamètre Φ.

Pour passer à la configuration des figures 10A et 10B, on a rentré un peu les vérins 6 et donc abaissé le corps 3, pour donner aux bielles 5 un angle α de serrage de 22°, et permettre le serrage d'une conduite 100 de diamètre Φ égal à 0,6 m. L'écartement e entre les ailes voisines 26 des mâchoires est de 67 mm.

Dans les figures 11 à 13, on utilise une deuxième taille de poutrelles adaptatrices 12, qui, même en position non déployée comme le montre la position des biellettes 24' sur les figures 11A et 12A, dépassent des ailes 26 des poutres comme on le voit bien sur les figures 11B et 12B. Pour les figures 11A et 11B, l'angle α est de 7°, le diamètre Φ de 0,2 m et l'écartement e de 14 mm. Pour les figures 12A et 12B, l'angle α est de 20°, le diamètre Φ de 0,39 m et l'écartement e de 66 mm. On note donc qu'on peut serrer dans cette configuration des conduites d'un même diamètre que dans la configuration des figures 9A et 9B.

Dans les figures 13A et 13B, on a utilisé la même taille de poutrelles 12, mais avec seulement quatre d'entre elles en position déployée, qui peuvent ainsi venir serrer une conduite de très faible diamètre (Φ = 0,08 m), les huit poutrelles restantes étant en position rentrée afin de ne pas gêner le rapprochement extrême des quatre poutrelles déployées.

## Revendications

1. Bride annulaire de serrage, comprenant une base annulaire rigide (2) présentant un axe et supportant par des moyens de support un ensemble annulaire coaxial de mâchoires (4) parallèles à l'axe et mobiles dans des plans diamétraux, lesdits moyens de support comportant d'une part un corps annulaire rigide (3) entourant l'ensemble de mâchoires (4), mobile en translation axiale grâce à des vérins commandables (6) qui le relient à la base (2), les mâchoires (4) étant reliées au corps annulaire (3) par au moins deux bielles (5) formant parallélogramme articulé, lesdits moyens de support comportant d'autre part des bielles longues articulées (14) sur la base (2) et sur l'extérieur des mâchoires (4) dans une position voisine de la direction axiale, de sorte que la translation axiale du corps annulaire (3) par rapport à la base (2) entraîne un déplacement essentiellement radial et synchronisé de l'ensemble de mâchoires (4).

2. Bride selon la revendication 1, **caractérisée en ce que** chacune des mâchoires (4) est constituée d'une poutre principale (23) et d'une poutrelle adaptatrice (12) montée sur la poutre principale (23) à une distance réglable entre au moins deux positions.

3. Bride selon la revendication 2, **caractérisée en ce que** les poutrelles adaptatrices (12) sont choisies dans des jeux de plusieurs tailles.

4. Bride selon l'une quelconque des revendications précédentes, **caractérisée en ce qu'**il est prévu dans la base (2) et le corps (3) de bride l'ouverture d'un secteur pour le passage latéral d'une conduite ou l'inspection.

## Patentansprüche

1. Ringförmige Klemmvorrichtung bzw. Flansch, umfassend eine starre, ringförmige Basis (2), die eine Achse aufweist und durch Supportmittel eine ringförmige Einheit trägt, die koaxial mit zur Achse parallelen Klemmen (4) und in diametral gegenüberliegenden Ebenen beweglich ist, wobei diese Supportmittel einerseits einen starren, ringförmigen Körper (3), der die Gruppe bzw. Gesamtheit der Klemmen (4) umgibt, trägt, der in axialer Richtung aufgrund von steuer- bzw. regelbaren Schraubenspindeln (6) quer bewegbar ist, welche ihn mit der Basis (2) verbinden, welche Klemmen (4) mit dem ringförmigen Körper (3) durch wenigstens zwei Zwischenglieder bzw. Pleuelstangen (5), die ein Gelenkparallelogramm ausbilden, verbunden sind, welche Supportmittel andererseits lange, gelenkige Pleuelstangen (14) auf der Basis (2) und auf dem Äußeren der Klemmen (4) in einer benachbarten Position zu der axialen Richtung derart aufweisen, daß die axiale Verschiebung des ringförmigen Körpers (3) in Bezug auf die Basis (2) eine im wesentlichen radiale und mit der Gesamtheit der Klemmen (4) synchronisierte Verlagerung erzwingt.

2. Klemmvorrichtung nach Anspruch 1, **dadurch gekennzeichnet, daß** jede der Klemmen (4) aus einem Haupttragebalken (23) und einem Anpassungsträger bzw. adaptierbaren Formstahlträger (12), der auf dem Haupttragbalken (23) in einem regelbaren Abstand zwischen höchstens zwei Positionen festgelegt ist, gebildet ist.

3. Klemmvorrichtung nach Anspruch 2, **dadurch gekennzeichnet, daß** die adaptierbaren Formstahlträger (12) aus Spielen bzw. Sätzen von mehreren Größen gewählt sind.

4. Klemmvorrichtung nach einem der vorhergehenden Ansprüche, **dadurch gekennzeichnet, daß** in der Basis (2) des Körpers (3) der Klemme die Öffnung eines Sektors für den seitlichen Durchgang einer Leitung oder für die Inspektion vorgesehen ist.

## Claims

1. Annular clamping ring comprising a rigid annular base (2) which has an axis, and supporting, by support means, a coaxial ring-shaped assembly of jaws (4) parallel to the axis and mobile in diametral planes, the said support means comprising, on the one hand, a rigid annular body (3) surrounding the assembly of jaws (4), mobile in axial translation by means of controllable cylinder actuators (6) which connect it to the base (2), the jaws (4) being connected to the annular body (3) by at least two connecting rods (5) forming an articulated parallelogram, the said support means also comprising long connecting rods (14) articulated on the base (2) and on the outside of the jaws (4) in a position which is almost the axial direction, such that the axial translation of the annular body (3) with respect to the base (2) causes a substantially radial and synchronized displacement of the assembly of jaws (4).

2. Clamp according to Claim 1, **characterized in that** each of the jaws (4) consists of a main beam (23) and of an adapter girder (12) mounted on the main beam (23) at a distance away that can be altered between at least two positions.

3. Clamp according to Claim 2, **characterized in that** the adapter girders (12) are chosen from sets of several sizes.

4. Clamp according to any one of the preceding claims, **characterized in that** provision is made in the base (2) and the body (3) of the clamp for a sector to be opened to slip a duct in sideways or for inspection.
